# EUROPÄISCHE PATENTSCHRIFT

(11) **EP 0 482 472 B1**
(45) Veröffentlichungstag und Bekanntmachung des Hinweises auf die Patenterteilung: **24.05.1995**
(21) Anmeldenummer: 91117527.1
(22) Anmeldetag: 15.10.1991
(51) Int. Cl.: H04B 10/10, H04B 10/22

(54) **Anordnung zur optischen Nachrichtenübertragung zwischen Satelliten**
Arrangement for optical data transmission between satellites
Dispositif pour la transmission optique de données entre satellites

(30) Priorität: 24.10.1990 DE 4033776
(43) Veröffentlichungstag der Anmeldung: 29.04.1992
(73) Patentinhaber: ANT Nachrichtentechnik GmbH, D-71522 Backnang (DE)
(72) Erfinder: Hildebrand, Ulrich, Dipl.-Ing., W-7012 Fellbach (DE)

(56) Entgegenhaltungen:
- WO-A-90/08433
- PROCEEDINGS OF SPIE, FREE-SPACE LASER COMMUNICATION TECHNOLOGIES Bd. 885, 11.Januar 1988, LOS ANGELES, CALIFORNIA, US Seiten 185 - 190; J.A.BREISACHER:'Diffraction-limited tracking for space communications'
- PATENT ABSTRACTS OF JAPAN vol. 7, no. 76 (E-167) 3. März 1983
- PROCEEDINGS OF SPIE, OPTICAL SPACE COMMUNICATION Bd. 1131, 24. April 1989, PARIS, FRANCE Seiten 116 - 127; H.HIBON ET AL: 'Breadboarding of a high bandwidth acquisition and fine tracking system for satellite optical communications'
- PATENT ABSTRACTS OF JAPAN vol. 12, no. 440 (E-684)18. November 1988

## Beschreibung

Die Erfindung betrifft eine Anordnung zur optischen Nachrichtenübertragung zwischen Satelliten mit einem Positionsdetektor, der zur Feststellung des Winkelfehlers zwischen Sender und Empfänger dient, und einem Informationsdetektor, der zur Verarbeitung der übertragenen Nachricht dient.

Bei der großen Entfernung zwischen miteinander Nachrichten austauschenden Satelliten, kommt es entscheidend darauf an, die von einem Satelliten ausgesendeten Lichtsignale mit möglichst geringem Leistungsverlust zu empfangen. Der empfangende Satellit benötigt zur Ausrichtung seiner Antenne, d.h. des Teleskops, die Information über seine Lage relativ zum sendenden Satelliten. Diese wird entweder über eine Auswertung der Degradation des empfangenen Datensignals oder durch besondere Detektoren gewonnen.

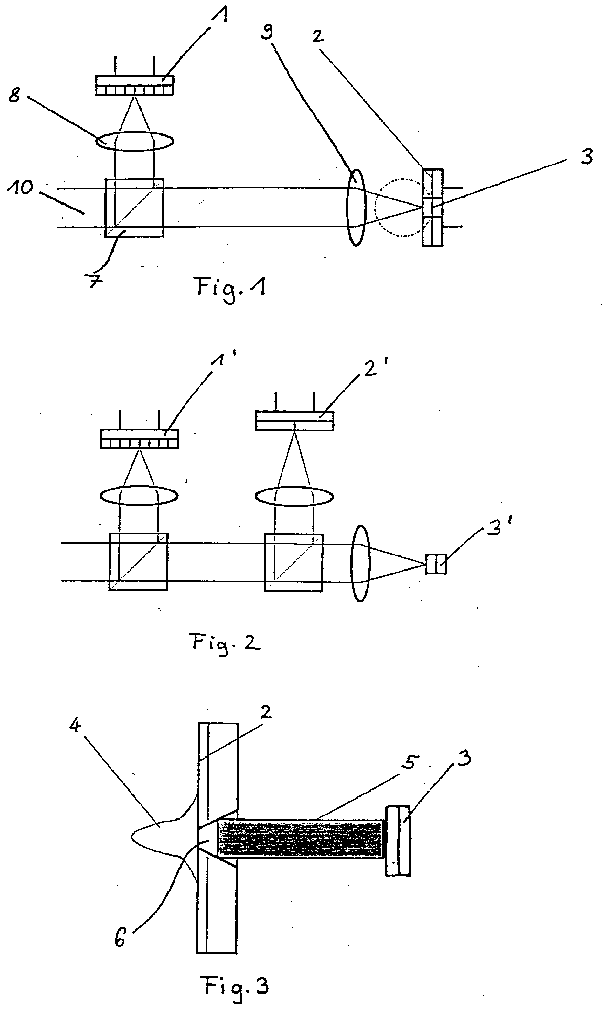

Aus "Optical Communication between Satellites" von G. Ohm inq Laser 1989, Proceedings of the 9th Intern. Congress on Optoelectronics in Engineering, seiten 861 bis 875, ist das optische Empfangssystem eines Satelliten bekannt (siehe Figur 2). In einer ersten Erfassungsphase, in der noch keine Nachrichtenübertragung stattfindet, trifft ein Teil des empfangenden Lichts auf einen Erfassungsdetektor (1′). Über eine entsprechende Auswerteelektronik, die die Lage des empfangenen Lichtes auf dem Erfassungsdetektor (1′) auswertet, wird die Position des Teleskops ausgerichtet. Ist dies erfolgt, so beginnt die Verfolgungsphase, in der die Nachrichtenübertragung stattfindet. Ein Teil des empfangenen Strahls trifft dabei auf einen Positionsdetektor (2′), der den Winkelfehler zwischen Sender und Empfänger erfaßt und zur Nachführung des empfangenden Teleskops dient. Der Großteil des empfangenen Lichts fällt auf den Informationsdetektor (3′). Die Nachführung erfolgt derart, daß der empfangene Lichtstrahl immer die Mitte des Positionsdetektors (2′) trifft und somit auch der Informationsdetektor (3′) getroffen wird. In der hier angesprochenen Lösung sind also zwei Detektoren vorgesehen, die verschiedene Winkelbereiche mit angepaßter Auflösung überdecken, um die Ausrichtung des Teleskops zu ermöglichen. Die relative Ausrichtung zwischen Positionsdetektor (2′) und Informationsdetektor (3′) muß sehr genau erfolgen. Nur so ist es möglich, maximale Leistung zu übertragen. Durch die Unsicherheit der relativen Ausrichtung zwischen den beiden Detektoren wird die Größe des Informationsdetektors bestimmt. Gleichzeitig führt ein übermäßig groß gewählter Blickbereich des Informationsdetektors zu einer Erhöhung der empfangenen Hintergrundleistung und damit zu einer Erhöhung des störenden Rauschpegels. Die sehr hohen Stabilitätsanforderungen an die Montage der Detektorsysteme können nur mit ausgewählten Materialien für die tragende Struktur und einer aufwendigen Temperaturregelung erfüllt werden. Trotzdem können Temperaturänderungen und Alterung der Materialen Änderungen der relativen Ausrichtung zwischen Positionsdetektor und Informationsdetektor bewirken.

Ausgehend von diesem Stand der Technik ist es Aufgabe der Erfindung, eine Anordnung anzugeben, bei der das obige Problem der temperaturstabilen und alterungsunabhängigen Positionierung von Positionsdetektor und Informationsdetektor vermieden wird.

Diese Aufgabe wird gelöst durch eine Anordnung mit den Merkmalen des Patentanspruches 1.

Vorteilhafte Weiterbildungen sind in den abhängigen Ansprüchen angegeben.

Eine Entschärfung der oben beschriebenen Probleme läßt sich dadurch erzielen, daß Positionsdetektor und Informationsdetektor zusammengefaßt werden. Dadurch müssen die beiden Detektoren nicht aufeinander ausgerichtet werden. Temperatur- und alterungsabhängige Änderungen wirken sich somit auch nicht auf die Ausrichtung der beiden Detektoren zueinander aus. Außerdem kann ein optisches System eingespart werden.

Anhand dar Zeichnungen werden Ausführungsbeispiele der Erfindung erläutert. Es zeigen
Figur 1 eine erfindungsgemäße mit einem monolithisch integrierten Positions- und Informationsdetektor,
Figur 2 eine Anordnung gemäß dem Stand der Technik und
Figur 3 eine Anordnung mit Positionsdetektor mit Ausparung, Lichtwellenleiter und Informationsdetektor.

In Figur 1 ist dargestellt, wie die optische Verarbeitung eines empfangenen Lichtstrahls 10 in einem empfangenen Satelliten erfolgt. Der empfangene Lichtstrahl 10 trifft zunächst auf einen Strahlteiler 7. Statt eines Strahlteilers, der als Leistungsaufteiler wirkt, kann beispielsweise eine Anordnung mit einem Lochspiegel eingesetzt werden, die den Strahl in Abhängigkeit vom Einfallswinkel aufteilt. Nach dem Strahlteiler 7 wird ein Teil des empfangenen Lichtstrahls mit einer Linse 8 auf einen Detektor 1 fokussiert. Mit der Information über die Lage des Fokusfleckes aus dem Erfassungsdetektors 1 wird eine grobe Richtungsregelung durchgeführt. Der Hauptanteil des empfangenen Lichtes 10 wird über eine Linse 9 auf die Kombination aus Positionsdetektor 2 und Informationsdetektor 3 fokussiert. Während der innere Teil des Fokusflecks in den Informationsdetektor 3 eingekoppelt wird, fällt der äußere Rand des Fokusflecks auf den Positionsdetektor. Dieser Teil wird dann zur Nachführung des Telekops also zur feinen Richtungsregelung benutzt. Als Positionsdetektor 2 können alle bekannten Detektortypen wie vier-Quadrantendiode, positionsempfindliche Flächendioden (PSD) oder Detektoren mit vielen Einzelelementen (CCD) verwendet werden. Der Positionsdetektor 2 muß jedoch in seiner Mitte eine Ausparung 6 aufweisen. Der Informationsdetektor 3 kann im gleichen Kristall wie der Positionsdetektor 2, d.h. monolithisch, oder direkt hinter diesem aufgebaut werden. Es ist aber auch möglich, daß sich in der Aussparung des Positionsdektors 2 eine Lichtleitfaser 5 befindet, die zum eigentlichen Empfänger, den Informationsdetektor, führt (Figur 3). Die Aufteilung der empfangenen optischen Leistung 4, die in Figur 3 mit einer Identitätsverteilung angegeben ist, kann durch die entsprechende Wahl der Geometrien, d.h. des Durchmessers der Aussparung 6, und des Abstandes zwischen Linse 9 und Positionsdetektor 2 erfolgen.

Durch die erfindungsgemäße Anordnung von Informationsdetektor 3 und Positionsdetektor 2 wirken sich Alterung und Temperaturänderungen der verwendeten Materialien nur noch geringfügig auf die Anordnung der Detektoren zueinander aus. Der Informationsdetektor kann entweder direkt mit dem Positionsdetektor verbunden werden, oder ist über eine Lichtleitfaser an die Aussparung im Positionsdetektor gekoppelt. Die hohen Stabilitätsanforderungen für den Winkel zwischen Positions- und Informationsdetektor werden durch die erfindungsgemäße Anordnung auf einfache Weise erfüllt. Eine Verschlechterung der Auflösung des Positionsdetektors durch die darin vorgesehene Aussparung ist nicht zu erwarten. Eine Verbesserung der Empfangsempfindlichkeit des Informationsdetektors ist erreichbar. Zudem wird die Optik im Empfangszweig vereinfacht, da eine Fokussierung des empfangenen Lichtes nur noch auf den kombinierten Detektor und nicht mehr einzeln auf beiden Detektoren notwendig ist.

## Patentansprüche

1. Anordnung zur optischen Nachrichtenübertragung zwischen Satelliten, die ein Empfangsteil aufweisen, das mit einem Positionsdetektor (2), der zur Feststellung des Winkelfehlers zwischen Sender und Empfänger dient, und einem Informationsdetektor (3), der zur Verarbeitung der übertragenen Nachricht dient, ausgestattet ist, dadurch gekennzeichnet, daß der Positionsdetektor (2) in seiner Mitte eine Aussparung (6) aufweist, in oder an der entweder ein Lichtwellenleiter (5), der mit dem Informationsdetektor (3) verbunden ist, oder der Informationsdetektor (3) fixiert ist.

2. Anordnung zur optischen Nachrichtenübertragung zwischen Satelliten nach Patentanspruch 1, dadurch gekennzeichnet, daß der Informationsdetektor (3) und der Positionsdetektor (2) im gleichen Kristall aufgebaut sind.

3. Anordnung zur optischen Nachrichtenübertragung zwischen Satelliten nach einem der Patentansprüche 1 oder 2, dadurch gekennzeichnet, daß als Positionsdetektor (2) eine Vier-Quadrantendiode, eine positionsempfindliche Flächendiode oder ein Detektor mit vielen Einzelelementen (CCD) vorgesehen ist.

## Claims

1. Arrangement for optical communications transmission between satellites, which comprise a receiver part which is equipped with a position detector (2), which serves for establishing the angular error between transmitter and receiver, and an information detector (3), which serves for processing the transmitted communication, characterised thereby that the position detector (2) has in its centre a cutout (6) in or at which is fixed either an optical conductor (5), which is connected with the information detector (3), or the information detector (3).

2. Arrangement for optical communications transmission between satellites according to patent claim 1, characterised thereby that the information detector (3) and the position detector (2) are incorporated in the same crystal.

3. Arrangement for optical communications transmission between satellites according to one of patent claims 1 or 2, characterised thereby that a four-quadrant diode, a position-sensitive areal diode or a detector with many individual elements (charge-coupled diodes is provided as position detector (2).

## Revendications

1. Dispositif pour la transmission optique d'information entre satellites, qui comprennent une partie réception équipée d'un détecteur de position (2), servant à déterminer l'erreur angulaire entre émetteur et récepteur, et d'un détecteur d'information (3) qui sert à traiter l'information transmise, caractérisé en ce que le détecteur de position (2) présente en son milieu un évidement (6) dans lequel ou auquel est fixé, soit un guide d'onde optique (5), lequel est relié au détecteur d'information (3), soit le détecteur d'information (3).

2. Dispositif pour la transmission optique d'information entre satellites selon la revendication 1, caractérisé en ce que le détecteur d'information (3) et le détecteur de position (2) sont réalisés dans le même cristal.

3. Dispositif pour la transmission optique d'information entre satellites selon la revendication 1 ou 2, caractérisé en ce que le détecteur de position (3) est une diode à quatre quadrants, une diode à jonction à sensibilité de position ou un détecteur comprenant de nombreux éléments individuels (tel qu'un dispositif à couplage de charge (CCD)).
